(19) Europäisches Patentamt
European Patent Office
Office européen des brevets

(11) **EP 2 696 187 B1**

(12) **FASCICULE DE BREVET EUROPEEN**

(45) Date de publication et mention
de la délivrance du brevet:
**18.11.2015 Bulletin 2015/47**

(51) Int Cl.:
***G01M 17/00*** *(2006.01)*     ***G01M 17/007*** *(2006.01)*
***G01M 17/04*** *(2006.01)*

(21) Numéro de dépôt: **13191672.8**

(22) Date de dépôt: **28.04.2009**

(54) **Méthode de prévision des efforts operationnels d un véhicule roulant sur un sol irrégulier**

Verfahren zur Vorhersage operativen Belastungen eines Fahrzeuges auf unebenem Boden

Method for predicting operational efforts of a vehicle travelling on uneven ground

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **30.04.2008 FR 0852940**

(43) Date de publication de la demande:
**12.02.2014 Bulletin 2014/07**

(62) Numéro(s) de document de la (des) demande(s) initiale(s) en application de l'article 76 CBE:
**09738157.8 / 2 277 022**

(73) Titulaires:
• **COMPAGNIE GENERALE DES ETABLISSEMENTS MICHELIN**
**63000 Clermont-Ferrand (FR)**
• **Michelin Recherche et Technique S.A.**
**1763 Granges-Paccot (CH)**

(72) Inventeurs:
• **Le Salver, Robert**
**"décédé" (FR)**
• **Beniguel, Jean-François**
**63400 Chamalieres (FR)**
• **Duvernier, Marc**
**63000 Clermont-Ferrand (FR)**
• **Payet, David**
**63118 Cebazat (FR)**

(74) Mandataire: **Dequire, Philippe Jean-Marie Denis**
**M.F.P. Michelin**
**23, place des Carmes-Déchaux**
**DGD/PI - F35 - Ladoux**
**63040 Clermont-Ferrand Cedex 09 (FR)**

(56) Documents cités:
**EP-A- 0 886 130     EP-B- 1 200 808**
**WO-A-2005/071385**

**Description**

**Domaine de l'invention**

L'invention concerne une méthode de prévision des niveaux acoustique et vibratoire à l'intérieur d'un véhicule roulant sur un sol présentant une ou plusieurs irrégularités de granulométrie donnée.

**Arrière plan technologique**

L'inconfort perçu par le conducteur et les passagers d'un véhicule au cours d'un roulage sur un ou plusieurs obstacles (comme par exemple des bouches d'égouts, des raccords de bitume, des joints divers, des graviers etc..) revêt deux aspects distincts. Un premier aspect est de nature vibratoire et se manifeste par des vibrations du plancher du véhicule, des sièges, du volant. Un second aspect est de nature acoustique et se manifeste par le bruit créé à l'intérieur du véhicule par les vibrations des différentes parties du véhicule. Le niveau d'inconfort ressenti par les occupants du véhicule dépend notamment de la caisse, du système de liaison au sol, de la vitesse de roulage et bien entendu du type d'obstacle sur la chaussée.

Plusieurs méthodes sont connues de l'homme du métier en vue d'évaluer la performance bruit/confort d'un nouveau système de liaison au sol pour un véhicule donné et lui permettant d'optimiser le système de liaison au sol. L'optimisation consiste à obtenir des caractéristiques d'un système de liaison au sol qui procurent un niveau de bruit/confort sensiblement amélioré.

Par exemple, en vue d'évaluer et optimiser la performance bruit/confort d'un véhicule équipé d'un nouveau système de liaison au sol, un homme du métier peut mettre en oeuvre une méthode expérimentale consistant à réaliser des mesures de bruit et de vibrations dans l'habitacle d'un véhicule roulant sur une portion de route ou de piste permettant de révéler un inconfort de nature vibratoire et/ou acoustique dans le véhicule, cette portion de route ou de piste comportant sur sa surface une ou plusieurs aspérités. Cette méthode nécessite toutefois de pouvoir disposer d'un véhicule pour évaluer différents systèmes de liaison au sol ; en outre, elle ne peut être conduite que dans des conditions météorologiques favorables ce qui induit un temps d'immobilisation du véhicule parfois excessivement long et en conséquence un surcoût dans la phase de mise au point d'un système de liaison au sol puisque de nombreuses itérations sont souvent nécessaires. Elle est en outre longue et fastidieuse pour l'opérateur et sujette à des grandes dispersions de mesure.

Selon une alternative, le document EP 0 886 130 B1 décrit une méthode de prévision du niveau de bruit dans l'habitacle d'un véhicule équipé de pneumatiques et roulant sur un sol irrégulier présentant une pluralité d'aspérités. Selon cette méthode, on détermine une fonction de transfert globale d'un véhicule équipé de pneumatiques en appliquant directement sur chaque essieu (au centre roue) du véhicule à l'arrêt des efforts dirigés suivant des directions prédéterminées (sous la forme de chocs). On procède pour chaque impact à un enregistrement sonore à l'intérieur du véhicule et cette opération est répétée successivement pour chacune des positions avant et arrière et pour chaque côté du véhicule. Dans une autre étape, un pneumatique identique roule sur un volant pourvu sur sa surface de roulage d'une pluralité d'aspérités simulant un sol irrégulier. Dans ce test, le pneumatique est monté à axe fixe et les efforts de blocage résultants au centre roue sont enregistrés. Pour terminer, ces efforts de blocage mesurés sont employés comme entrée d'un modèle faisant intervenir la fonction de transfert véhicule déterminée comme rappelé plus haut de façon à obtenir le niveau de bruit résultant à l'intérieur du véhicule. Cette méthode comporte toutefois des limites. En particulier pour tout changement d'ensemble monté il est nécessaire de réaliser à nouveau la détermination de la fonction de transfert globale du véhicule.

De plus, la fonction de transfert véhicule étant établie à partir d'essais pratiqués à l'arrêt, il n'est pas tenu compte des caractéristiques mécaniques des pneumatiques en roulage qui, en règle générale, sont sensiblement différentes des mêmes caractéristiques à l'arrêt. Il est notamment connu que la rigidité verticale sous sollicitation dynamique d'un pneumatique à l'arrêt est supérieure à la même rigidité verticale sous sollicitation dynamique d'un pneumatique roulant.

Selon une autre alternative, le document EP 1 200 808 B1 décrit une méthode de prévision de la performance bruit/confort d'un véhicule constitué d'une caisse équipée d'un système de liaison au sol et roulant sur un sol irrégulier présentant une pluralité d'aspérités. On procède ici en deux étapes. On effectue tout d'abord des mesures acoustiques et vibratoires à l'intérieur de l'habitacle du véhicule lorsque le système de liaison au sol est en condition de roulage sur un sol présentant une ou plusieurs irrégularités. Un second essai consiste à placer le système de liaison au sol, au niveau des points d'attache, sur un bâti rigide. Le système de liaison au sol est en condition de roulage de façon analogue à l'étape n°1 (charge, pression, vitesse). Le bâti rigide est équipé d'un système de mesure des efforts de blocage au niveau de chaque point d'attache du système de liaison au sol. On enregistre, au cours de cet essai, les signaux de force et de moment en chaque point d'attache du système de liaison au sol. On détermine la fonction de transfert véhicule par le rapport du niveau acoustique et vibratoire à l'intérieur du véhicule et le niveau d'effort de blocage du système de liaison au sol. Pour la même caisse équipée d'un système de liaison au sol prototype, il est possible de prévoir le niveau acoustique et vibratoire à l'intérieur du véhicule lorsque le système de liaison au sol prototype roule sur un sol irrégulier présentant une ou plusieurs aspérités. En plaçant le système de liaison au sol prototype sur le bâti rigide au niveau de ces points d'attache, le système de liaison au sol prototype roule sur un sol irrégulier identique à celui de l'essai sur véhicule. On mesure les efforts de blocage au niveau des points d'attache. En multipliant la fonction de transfert véhicule par ces efforts de blocage du système de liaison au sol prototype, on évalue le niveau acoustique et vibratoire de la caisse munie du système de liaison au sol prototype roulant sur un sol irrégulier. Cette méthode, comporte aussi des limites qui peuvent, pour des systèmes de liaison au sol de structure différente, par exemple au niveau de la structure du pneumatique à dimension identique, fournir des niveaux de bruits différents de ceux obtenus à partir d'essais réalisés avec le même véhicule équipé de ces différents système de liaison au sol et roulant sur un sol irrégulier.

En particulier, la fonction de transfert véhicule est déterminée pour un système de liaison au sol de référence. Ce système de liaison au sol de référence a son propre comportement mécanique qui influence la fonction de transfert véhicule. Un système de liaison au sol prototype a son propre comportement mécanique qui peut influencer de façon différente la fonction de transfert véhicule.

Enfin, le document WO 2005/071385 A1 décrit une méthode de détermination des efforts opérationnels au centre roue entre le système de liaison au sol réduit à son simple ensemble monté et la caisse. Ces efforts opérationnels déterminent une nouvelle fonction de transfert véhicule permettant de prédire la performance bruit/confort d'un véhicule muni de cet ensemble monté roulant sur un sol irrégulier présentant une pluralité d'aspérités.

Dans une première étape, une mesure des efforts de blocage de l'ensemble monté est réalisé sur une rouleuse muni d'un sol irrégulier présentant une pluralité d'aspérités. Cette rouleuse est munie d'un moyeu dynamométrique mesurant les efforts de blocage au centre roue dans trois directions perpendiculaires correspondant au repère véhicule. Lorsque l'ensemble monté roule sur un sol irrégulier, on enregistre les efforts de blocage résultant de ce roulage à l'aide du moyeu dynamométrique.

On détermine ensuite un modèle fonctionnel de la suspension caractérisé par des masses non suspendues ainsi que les raideurs et amortisseurs dans les trois directions du repère véhicule.

Classiquement, ce modèle fonctionnel est défini dans les directions du repère véhicule et les couplages entre les directions perpendiculaires sont négligés. De plus, on ne prend en compte que les forces dans les directions perpendiculaires. L'identification des paramètres de ce modèle fonctionnel est effectuée par des mesures sur le véhicule. En reliant ce modèle fonctionnel de la suspension à un modèle du pneumatique, on détermine une matrice de passage (Hp) entre les efforts de blocage et les efforts opérationnels au centre roue. L'estimation des efforts opérationnels au centre roue de l'ensemble monté est obtenue en multipliant la matrice de passage (Hp) par les efforts de blocage à l'étape 1.

A l'étape 3, on effectue des mesures acoustiques et vibratoires à l'intérieur de l'habitacle du véhicule lorsque l'ensemble monté est en condition de roulage sur un sol présentant une pluralité d'obstacles.

A l'étape 4, on détermine une nouvelle fonction de transfert véhicule par le rapport du niveau acoustique et vibratoire à l'intérieur du véhicule et le niveau d'efforts opérationnels de l'ensemble monté.

Pour la même caisse équipée d'un ensemble monté prototype, il est possible de prévoir le niveau acoustique et vibratoire à l'intérieur du véhicule lorsque le véhicule muni de cet ensemble monté prototype roule sur un sol irrégulier muni de plusieurs aspérités. En plaçant l'ensemble monté prototype sur le bâti rigide au niveau du centre roue, l'ensemble monté roule sur un sol irrégulier identique à celui de l'essai sur véhicule. On mesure les efforts de blocage au niveau du centre roue. En multipliant la matrice de passage (Hp) par les efforts de blocage, on évalue les efforts opérationnels de l'ensemble monté au centre roue. En multipliant la fonction de transfert véhicule par ces efforts opérationnels de l'ensemble monté prototype, on évalue le niveau acoustique et vibratoire du véhicule roulant sur un sol irrégulier.

La détermination du modèle fonctionnel de la suspension est une des limites de cette méthode. Ce modèle fonctionnel ne suppose aucun couplage entre les directions perpendiculaires et l'identification des paramètres n'est pas aisée. Ensuite, cette méthode ne prend en compte que les forces dans les trois directions orthogonales du repère véhicule, il est reconnu que les moments sont aussi à prendre en compte.

### Définitions

Dans ce qui suit, on entend par :

- « **performance bruit/confort** » le niveau vibroacoustique, c'est-à-dire acoustique et/ou vibratoire, mesurable à l'intérieur d'un véhicule roulant sur une chaussée (ou sur un moyen d'essai) pourvue d'au moins un obstacle de dimension déterminée ;
- « **système de liaison au sol** » un ensemble d'éléments du véhicule assurant le lien entre une ou plusieurs surfaces de contact entre le véhicule et la chaussée et un ou plusieurs points du véhicule ; dans tous les cas, le système de liaison au sol comporte au moins l'ensemble monté ;
- « **ensemble monté** » un ensemble constitué d'un pneumatique et de sa roue de montage ;
- « **caisse** » l'ensemble des éléments du véhicule complémentaire du système de liaison au sol ;
- « **point d'attache** » un point qui lie le système de liaison au sol à la caisse ;
- « **repère véhicule** » le repère orthonormé direct dans lequel la direction X correspond à la direction longitudinale du véhicule dirigée de l'arrière vers l'avant, l'axe Z est orthogonal au sol dirigé vers le haut et la direction Y est perpendiculaire aux deux autres pour former le repère direct ;

- « **fonction de transfert globale du véhicule** » une fonction qui comprend deux parties, la première partie concerne le bruit dans l'habitacle du véhicule et la seconde partie les vibrations en certains points prédéterminés dans le même habitacle pour une excitation au point d'attache du système de liaison au sol à la caisse du véhicule ;

- « **fonction de transfert globale de la caisse** » une fonction qui comprend deux parties, la première partie concerne le bruit dans l'habitacle de la caisse et la seconde partie les vibrations en certains points prédéterminés dans le même habitacle pour une excitation au point d'attache du système de liaison au sol à la caisse ;

- « **admittance au point d'attache de la caisse** » une fonction qui lie le niveau vibratoire de « k » point(s) d'attache de la caisse à une excitation extérieure unitaire et prédéterminée au(x) « k » point(s) d'attache sur la caisse ; c'est au plus une matrice 6k*6k qui lie les accélérations de translation et de rotation aux efforts et moments au niveau du(des) point(s) d'attache de la caisse ; cette matrice est exprimée dans le repère véhicule ;

- « **impédance au point d'attache du système de liaison au sol** » une fonction qui lie le niveau d'effort et de moment du(des) « k » point(s) d'attache du système de liaison au sol à une excitation vibratoire unitaire et prédéterminée du(des) « k » point(s) d'attache ; c'est au plus une matrice 6k*6k qui lie les forces et les moments aux accélérations de translation et de rotation au niveau du(des) point(s) d'attache de la liaison au sol ; cette matrice est exprimée dans le repère véhicule ;

- « **efforts de blocage au point d'attache** » les forces et moments au point d'attache du véhicule résultant d'un déplacement nul, en translation et rotation, de ce point d'attache, lorsque le système de liaison au sol est soumis à des efforts extérieurs liés à un roulage sur un sol présentant au moins un obstacle de dimension déterminée ; ces efforts sont exprimés dans le repère véhicule ; et

- « **efforts opérationnels au point d'attache** » les forces et moments au point d'attache du véhicule résultant du déplacement, en translation et rotation, de ce point d'attache en condition en service sur le véhicule, lorsque le système de liaison au sol est soumis à des efforts extérieurs liés à un roulage sur un sol présentant au moins un obstacle de dimension déterminée ; ces efforts sont exprimés dans le repère véhicule.

**Description de l'invention**

L'objet de l'invention est une méthode de prédiction de la performance bruit/confort d'un véhicule équipé de systèmes de liaison au sol qui ne présente pas les inconvénients des méthodes qui viennent d'être rappelées.

Dans ce but, il est proposé une méthode de prévision de la performance bruit/confort correspondant au niveau acoustique et/ou vibratoire dans l'habitacle d'un véhicule avec une caisse et un système de liaison au sol lié à la caisse par au moins un point d'attache, ce véhicule roulant à une vitesse donnée V sur un moyen de roulage comportant sur sa surface de roulage au moins une aspérité de dimension prédéterminée, cette méthode consistant à :

- déterminer une fonction de transfert globale de la caisse exprimée du point d'attache vers l'habitacle ($T_{caisse}$)
- déterminer une admittance de la caisse au point d'attache du système de liaison au sol à la caisse ($Y_{caisse}$);
- déterminer une impédance du système de liaison au sol exprimée au point d'attache à la caisse ($Z_S$) ;
- déterminer en roulage les efforts de blocage du système de liaison au sol au point d'attache $\left( F_S^b \right)$ ; et
- combiner ensemble la fonction de transfert globale de la caisse, l'admittance globale de la caisse, l'impédance globale du système de liaison et les efforts de blocage du système de liaison au sol.

L'avantage de cette méthode consiste à dissocier le véhicule en deux composants distincts, la caisse et le système de liaison au sol qui sont étudiés indépendamment l'un de l'autre. En conséquence, la caractérisation de la caisse ne doit être faite qu'une seule fois pour prévoir la performance bruit/confort du véhicule équipé d'un quelconque système de liaison au sol.

La fonction de transfert globale de la caisse ($T_{caisse}$) et l'admittance de la caisse *($Y_{caisse}$)* peuvent être déterminées à l'arrêt.

Avantageusement, pour déterminer la fonction de transfert globale de la caisse, on procède à des mesures sur la caisse à l'arrêt selon les étapes suivantes :

- on dispose à l'intérieur du véhicule des moyens aptes à enregistrer le bruit et les vibrations en *m* points préalablement déterminés dans l'habitacle ;
- on positionne le point d'attache du système de liaison au sol par rapport à la caisse de façon analogue à sa position sur le véhicule équipé du système de liaison au sol ; le point d'attache au niveau de la caisse étant libre en déplacement et rotation et étant suspendu à l'aide de liaisons élastiques souples ;
- on applique une excitation au point d'attache du système de liaison au sol à l'aide d'un système d'excitation dans des directions prédéterminées correspondant à des excitations canoniques dans les directions du repère véhicule ;
- pour chaque excitation, on enregistre les bruits et vibrations dans l'habitacle du véhicule ainsi que, au niveau du point d'attache excité, le signal d'excitation ;

- on traduit l'ensemble des données temporelles vers le domaine fréquentiel à l'aide de logiciels informatiques ; et
- en ramenant les *m* signaux de bruits et de vibrations des divers points de la caisse à une excitation unitaire en translation ou rotation dans le repère orthonormé direct du véhicule, on obtient la fonction de transfert globale de la caisse.

Avantageusement, lorsque le point d'attache n'est pas accessible, des excitations sont appliquées en des points géométriques parfaitement déterminés vis-à-vis du point d'attache. Dans ce cas, une transformation géométrique permet de recalculer les efforts au point d'attache à partir des efforts aux points d'excitation.

Avantageusement, le système d'excitation du point d'attache peut comporter un pot vibrant.

De préférence, pour déterminer l'admittance de la caisse au point d'attache du système de liaison au sol à la caisse, on procède à des mesures sur la caisse à l'arrêt selon les étapes suivantes :

- on positionne le point d'attache du système de liaison au sol par rapport à la caisse de façon analogue à sa position sur le véhicule équipé du système de liaison au sol ; le point d'attache au niveau de la caisse étant libre en déplacement et rotation et étant suspendu à l'aide de liaisons élastiques souples ;
- on équipe le point d'attache de capteurs de vibrations tels des accéléromètres permettant de mesurer le niveau vibratoire en translation et en rotation du point d'attache de la caisse ;
- on applique au point d'attache des excitations à l'aide d'un système d'excitation dans des directions prédéterminées correspondant à des excitations canoniques dans les directions du repère véhicule ;
- pour chaque excitation, on enregistre le signal d'excitation au niveau du point d'attache excité et les réponses vibratoires du point d'attache ;
- on traduit l'ensemble des données temporelles vers le domaine fréquentiel à l'aide de logiciels informatiques ; et
- on détermine l'admittance de la caisse au niveau du point d'attache en faisant le rapport entre les réponses vibratoires dans les diverses directions du repère véhicule du point d'attache et le signal d'excitation au niveau du point d'attache excité.

Avantageusement, on enregistre les réponses vibratoires de translation et de rotation du point d'attache excité.

Avantageusement, lorsque le point d'attache n'est pas accessible, des capteurs de vibrations tels des accéléromètres sont placés et des excitations sont appliquées en des points géométriques parfaitement déterminés vis-à-vis du point d'attache. Dans ce cas une transformation géométrique permet de recalculer les niveaux vibratoires du point d'attache.

Pour déterminer l'impédance du système de liaison au sol exprimée au point d'attache à la caisse, on peut procéder à des mesures sur le système de liaison au sol selon les étapes suivantes :

- on met en place le système de liaison au sol sur un dispositif équipé d'un revêtement lisse ;
- on relie mécaniquement le système de liaison au sol à un banc au niveau du point d'attache par l'intermédiaire de connexions, par exemple des cales élastiques souples vis-à-vis de la rigidité du système de liaison au sol, telles que le point d'attache est libre de se mouvoir dans une direction donnée de translation ou de rotation ; le banc étant équipé de moyens de mesure des déplacements (translation et rotation) et des efforts (forces et moments) du point d'attache du système de liaison au sol ;
- on applique une excitation au point d'attache à l'aide d'un système d'excitation adapté pour imposer la cinématique du point d'attache dans la direction préalablement laissée libre de mouvement ;
- on effectue pour chaque excitation au point d'attache, pour l'ensemble des degrés de liberté du point d'attache, une mesure du vecteur déplacement du point d'attache excité et une mesure du vecteur des efforts résultants (forces et moments) au point d'attache du système de liaison au sol ;
- on traduit l'ensemble des données temporelles vers le domaine fréquentiel à l'aide de logiciels informatiques ; et
- on détermine l'impédance du système de liaison au sol en faisant le rapport entre les signaux de forces et de moments du point d'attache et le niveau vibratoire du point d'attache pour au plus les six degrés de liberté du point d'attache.

Avantageusement, préalablement à l'application des excitations, le système de liaison au sol est mis en place sur le dispositif équipé d'un revêtement lisse dans des conditions de roulage semblables à celles du véhicule.

Avantageusement, le système d'excitation est adapté pour imposer la cinématique du point d'attache dans la direction préalablement laissée libre de mouvement sans exciter les autres degrés de liberté du point d'attache.

De préférence, on mesure les déplacements de translation et de rotation du point d'attache, et le système d'excitation comprend des pots vibrants.

Pour solliciter un degré de liberté en translation du point d'attache, le système d'excitation peut comprendre au moins un pot vibrant positionné au niveau du point d'attache dans la direction que l'on désire exciter.

Avantageusement, si le point d'attache n'est pas accessible, on positionne des pots vibrants de façon symétrique par rapport au point d'attache par l'intermédiaire d'un montage adapté et on les excite en phase.

Pour solliciter un degré de liberté en rotation du point d'attache, on peut positionner au moins deux pots vibrants de façon symétrique par rapport au point d'attache par l'intermédiaire d'un montage adapté et exciter les au moins deux pots vibrants en opposition de phase.

Pour déterminer les efforts de blocage du système de liaison au sol au niveau du point d'attache, on peut procéder à des mesures sur le système de liaison au sol selon les étapes suivantes :

- on met en place le système de liaison au sol sur un moyen de roulage comportant sur sa surface de roulage au moins une aspérité de dimension prédéterminée similaire aux essais sur véhicule ;
- on fixe rigidement le système de liaison au sol sur un banc au niveau du point d'attache ; le banc étant équipé de moyens de mesure des efforts (forces et moments) au point d'attache ;
- on sollicite le système de liaison au sol sur le moyen de roulage dans des conditions de roulage identiques à celles du véhicule ;
- au cours du roulage, on enregistre les signaux des efforts (forces et moments) au point d' attache ; et
- on traduit l'ensemble des données temporelles vers le domaine fréquentiel à l'aide de logiciels informatiques.

Enfin, pour évaluer la performance bruit/confort du véhicule équipé du système de liaison au sol, on effectue l'opération suivante :

$$P = T_{caisse} * \left[ I + Z_S * Y_{caisse} \right]^{-1} * F_S^b$$

dans laquelle :

- $P$ est la performance vibroacoustique du véhicule dans l'habitacle, c'est une matrice de dimensions $m$, $1$ ; $m$ étant le nombre de points de mesure dans l'habitacle ;
- $T_{caisse}$ est la fonction de transfert globale de la caisse, c'est une matrice de dimensions $m$, $n$ ;
- $I$ est une matrice unité de dimensions $n$, $n$ ; $n$ étant le nombre de directions prédéterminées d'excitation dudit point d'attache ;
- $Y_{caisse}$ est l'admittance de la caisse ; matrice carrée de dimension $n$ ;
- $Z_S$ est l'impédance du système de liaison au sol ; matrice carrée de dimension $n$ ; et
- $F_S^b$ correspond aux efforts de blocage du système de liaison au sol ; matrice de dimensions $n$, $1$.

La performance bruit/confort du véhicule se présente comme une matrice de dimension $m*1$ où chaque ligne est la réponse vibratoire ou acoustique en un point $m$ de l'habitacle du véhicule dans le domaine fréquentiel.

L'invention a aussi pour objet une méthode de prévision des efforts opérationnels au point d'attache d'un véhicule constitué d'une caisse et d'un système de liaison au sol lié à la caisse par au moins un point d'attache, le véhicule roulant à une vitesse donnée V sur un moyen de roulage comportant sur sa surface de roulage au moins une aspérité de dimension prédéterminée, cette méthode consistant à :

- déterminer une admittance de la caisse exprimée au point d'attache du système de liaison au sol à la caisse ($Y_{caisse}$) ;
- déterminer une impédance du système de liaison au sol exprimée au point d'attache ($Z_S$);
- déterminer en roulage les efforts de blocage du système de liaison au sol au point d'attache $\left( F_S^b \right)$ ; et
- combiner ensemble l'admittance globale de la caisse, l'impédance globale du système de liaison au sol et les efforts de blocage du système de liaison au sol.

Cette méthode correspond à effectuer l'opération suivante :

$$F_S^{op} = \left[ I + Z_S * Y_{caisse} \right]^{-1} * F_S^b$$

dans laquelle, pour chaque fréquence étudiée :

- $F_S^{op}$ correspond aux efforts opérationnels au point d'attache du véhicule, c'est une matrice de dimensions $n$, $1$ ; $n$ étant le nombre de directions prédéterminées d'excitation dudit point d'attache du véhicule ;
- $I$ est une matrice unité de dimensions $n$, $n$ ;
- $Y_{caisse}$ est l'admittance de la caisse ; matrice carrée de dimension $n$ ;
- $Z_S$ est l'impédance du système de liaison au sol ; matrice carrée de dimension $n$ ; et
- $F_S^b$ correspond aux efforts de blocage du système de liaison au sol ; matrice de dimensions $n$, $1$.

Les efforts opérationnels au point d'attache du véhicule se présentent comme une matrice de dimension n, 1 où chaque ligne correspond à un effort ou un moment au point d'attache du véhicule dans une direction prédéterminée du repère véhicule dans le domaine fréquentiel.

-La connaissance des efforts opérationnels permet de trier des systèmes de liaison au sol vis-à-vis du comportement mécanique d'une caisse spécifique.

Le système de liaison au sol peut avantageusement se réduire à un ensemble monté pneumatique/roue.

Bien entendu, les données expérimentales précédentes peuvent être substituées par des données numériques issues d'une simulation de la caractérisation expérimentale.

**Description brève des dessins**

Des exemples de réalisation sont donnés dans la description qui suit, complétée par les figures 1 à 14, dans lesquelles :

- la figure 1 présente une caisse automobile mise en place pour obtenir la fonction de transfert globale issue du train arrière ou l'admittance globale de la caisse issue du train arrière ;
- les figures 2 (a) et (b) présentent un dispositif d'excitation d'un point d'attache permettant aussi de mesurer le niveau vibratoire du point d'attache ;
- la figure 3 présente un système de liaison au sol monté souple au niveau d'au moins un point d'attache sur un bâti ;
- la figure 4 montre sous un autre angle de vue, le montage de la figure 3 ;
- la figure 5 présente un système de liaison au sol monté rigidement sur un bâti,
- la figure 6 montre, sous un autre angle de vue, le montage de la figure 5 ;
- la figure 7 montre un pneumatique monté rigidement sur sa roue de montage et écrasé sur un volant de roulage ;
- la figure 8 présente un exemple d'une fonction de transfert acoustique d'une caisse entre le centre roue arrière droit et un microphone dans l'habitacle à la place avant gauche ; le graphe (a) correspond à l'amplitude du transfert acoustique dans le domaine fréquentiel tandis que le graphe (b) représente la phase de ce transfert ;
- la figure 9 présente l'admittance d'une caisse au niveau du centre roue avant gauche ; le graphe (a) correspond à l'amplitude de l'admittance exprimé en échelle logarithmique dans le domaine fréquentiel tandis que le graphe (b) représente la phase de cette même admittance ;
- La figure 10 présente l'impédance d'un ensemble monté au centre roue ; le graphe (a) correspond à l'amplitude de l'impédance à l'arrêt exprimée dans le domaine fréquentiel tandis que le graphe (b) représente la phase de cette impédance ;
- la figure 11 correspond aux efforts de blocage d'un ensemble monté obtenus au centre roue ; le graphe (a) correspond à l'autospectre des efforts de blocage dans la direction X exprimé dans le repère véhicule tandis que le graphe (b) représente l'autospectre des efforts en Z pour ce même ensemble monté ;
- la figure 12 présente une comparaison du niveau vibratoire sur véhicule dont seule la roue arrière droite roule, à une vitesse moyenne de 80 Km/h, sur un sol macrorugueux identique aux mesures des efforts de blocage ; cette figure représente un autospectre vibratoire du véhicule dans la direction Z en un point géométrique particulier ; le trait continu visualise le niveau vibratoire synthétisé par la méthode exposée dans ce document ; le trait en pointillé correspond à la mesure directe par un accéléromètre ;
- la figure 13 présente une comparaison du niveau acoustique sur véhicule dont seule la roue arrière droite roule, à une vitesse moyenne de 80 Km/h, sur un sol macrorugueux identique aux mesures des efforts de blocage ; cette figure représente le spectre acoustique d'un microphone à l'intérieur du véhicule situé à la place arrière droite ; le trait continu visualise le bruit synthétisé par la méthode exposée par ce document ; le trait en pointillé correspond à une mesure directe par le microphone ; et
- la figure 14 présente les efforts opérationnels obtenus par combinaison de grandeurs similaires à celles illustrées aux figures 9, 10 et 11 ; cette figure représente un autospectre de l'effort dans la direction Z au niveau du centre roue.

**Description détaillée de modes de réalisation**

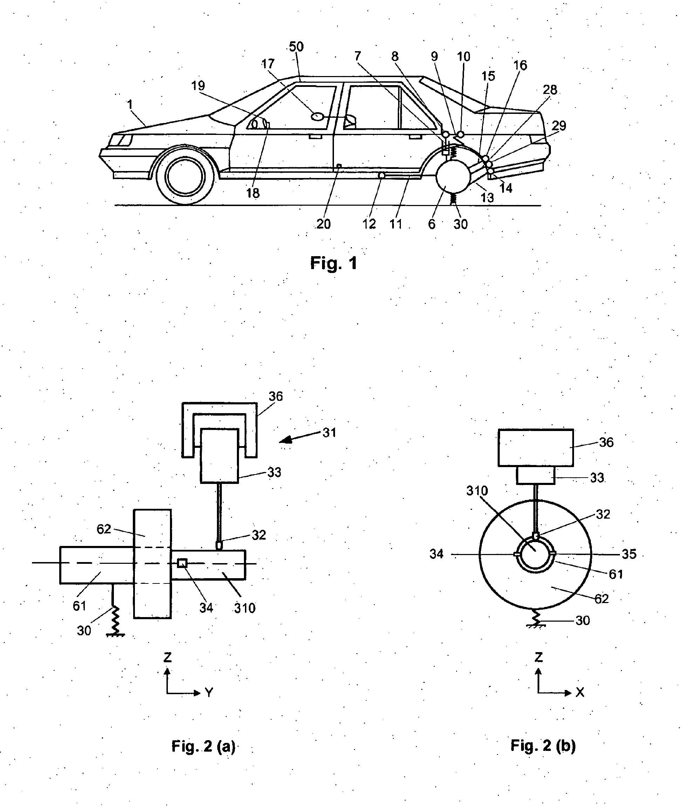

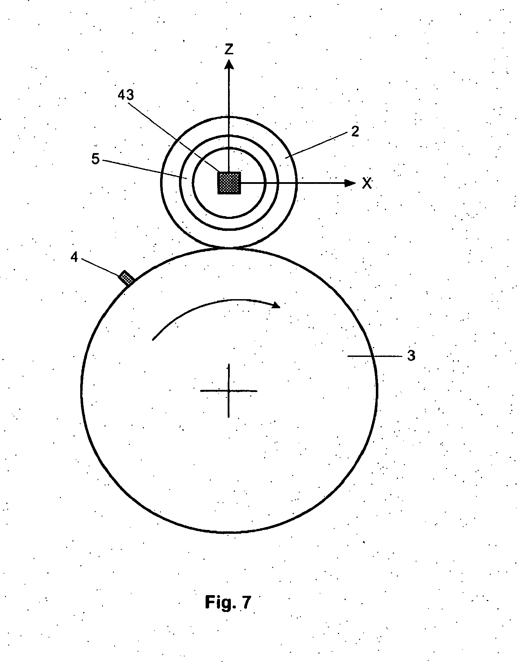

Sur la figure 1, on distingue un véhicule de tourisme 1, dont l'ensemble monté arrière gauche est démonté ce qui correspond à la définition de la caisse 50.

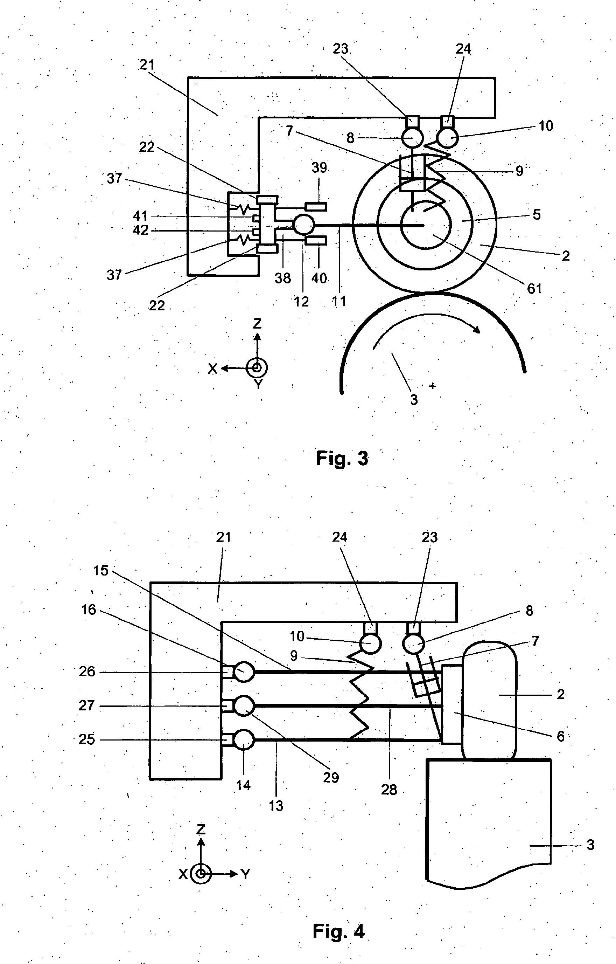

Sur les figures 3 et 4, le pneumatique arrière gauche 2 repose sur un volant 3 de diamètre 1,6 m revêtu d'un revêtement de surface lisse. Des moyens non représentés sont prévus pour entraîner le volant 3 en rotation.

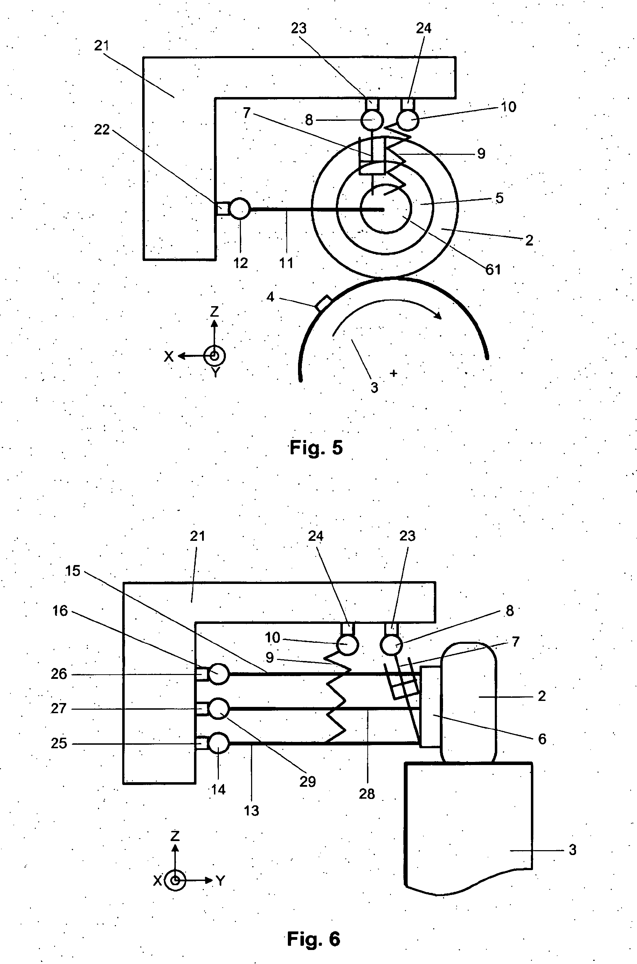

Sur les figures 5 et 6 le pneumatique arrière gauche 2 repose sur un volant 3 lisse. Une barrette 4 de section droite rectangulaire de largeur 20 mm et de hauteur 10 mm est disposée transversalement sur la surface du volant 3 (c'est-à-dire parallèlement à l'axe de rotation du volant). Des moyens non représentés sont prévus pour entraîner le volant 3 en rotation.
Dans le premier exemple présenté au moyen des figures 1 et 7, le système de liaison au sol est limité à un pneumatique arrière gauche 2 monté sur une roue 5.
Dans le second exemple présenté au moyen des figures 3, 4, 5 et 6, le système de liaison au sol comprend notamment les éléments suivants : un pneumatique arrière gauche 2 monté sur une roue 5 ; un ensemble porte-moyeu/moyeu 6 avec un moyeu fixe 61 et un porte moyeu mobile en rotation 62 ; un amortisseur arrière gauche 7 ; une attache supérieure 8 de l'amortisseur arrière gauche 7; un ressort arrière gauche 9 ; une pièce de filtrage 10 du ressort arrière gauche ; un bras longitudinal arrière gauche 11 ; une articulation élastique 12 de connexion du bras longitudinal arrière gauche 11 à la caisse 50 ; un bras inférieur arrière gauche 13 ; une articulation élastique 14 de connexion du bras inférieur arrière gauche 13 à la caisse 50 ; un bras supérieur arrière gauche 15 ; une articulation élastique 16 de connexion du bras supérieur arrière gauche 15 à la caisse 50 ; une biellette de pince 28 arrière gauche ; une rotule 29 assurant le lien entre la biellette 28 et la caisse 50. Diverses pièces secondaires ne sont pas représentées sur les figures (vis, écrous, rotules, roulements, articulations élastiques, etc.).

Le véhicule 1 est équipé à l'intérieur de son habitacle avec notamment :

- un microphone 17 localisé au niveau de l'oreille droite du conducteur du véhicule pour l'enregistrement du bruit ou niveau acoustique ; et
- un accéléromètre 18 tri-directionnel placé sur le volant de direction 19 du véhicule, et un accéléromètre 20 tri-directionnel placé sur l'une des glissières du siège du conducteur pour les enregistrements vibratoires dans l'habitacle.

La méthode selon l'invention permet de prévoir, pour un vitesse V choisie et dans les conditions de roulage sur volant 3 pourvu d'une aspérité ou obstacle 4, la performance bruit/confort du véhicule 1.

Pour obtenir les entrées du système, on procède tout d'abord, comme représenté à la figure 1, à l'identification de la fonction de transfert de la caisse $T_{caisse}$ et de l'admittance de la caisse $Y_{caisse}$ au point d'attache. La caisse 50 est suspendue au niveau du point d'attache de l'ensemble monté par l'intermédiaire de liaisons souples 30. En conséquence, le point d'attache est libre en déplacement et rotation et se trouve à une position analogue à sa position sur le véhicule équipé de l'ensemble monté.

Pour appliquer l'excitation et mesurer le niveau vibratoire du point d'attache, comme représenté à la figure 2, on utilise un système d'excitation 31. Ce système comprend un pot vibrant d'excitation 33 mis en place dans des positions et directions prédéterminées au moyen du dispositif de positionnement 36. Une tête d'impédance 32 à l'extrémité du pot vibrant enregistre le signal d'excitation. Dans l'exemple de la figure 2, l'extrémité 32 du pot vibrant est appliquée contre une pièce 310 disposée dans le prolongement du moyeu fixe 61. Ce point d'application de l'excitation est décalé du point d'attache de l'ensemble monté, le centre-roue, mais le point d'application de l'excitation est bien déterminé relativement au point d'attache et une transformation géométrique permet de recalculer les efforts au point d'attache à partir des efforts au point d'excitation. Le dispositif 36 positionne le pot vibrant de telle sorte que le point d'attache soit excité dans l'une des directions correspondant aux excitations canoniques dans les directions du repère véhicule.

Le système d'excitation 31 par pots vibrants est conçu de façon que sa première fréquence de résonance ne soit pas comprise dans la plage des fréquences de réalisation des mesures.

Pour chaque excitation, on enregistre les bruits et vibrations dans l'habitacle du véhicule au moyen du microphone 17 et des accéléromètres 18 et 20 ainsi que le signal d'excitation au moyen de la tête d'impédance 32.

L'ensemble des données temporelles est alors traduit vers le domaine fréquentiel à l'aide de logiciels informatiques bien connus d'un homme du métier et en ramenant les signaux de bruits et de vibrations des divers points de la caisse à une excitation unitaire en translation ou rotation dans le repère orthonormé direct du véhicule, on obtient la fonction de transfert globale de la caisse $T_{caisse}$.

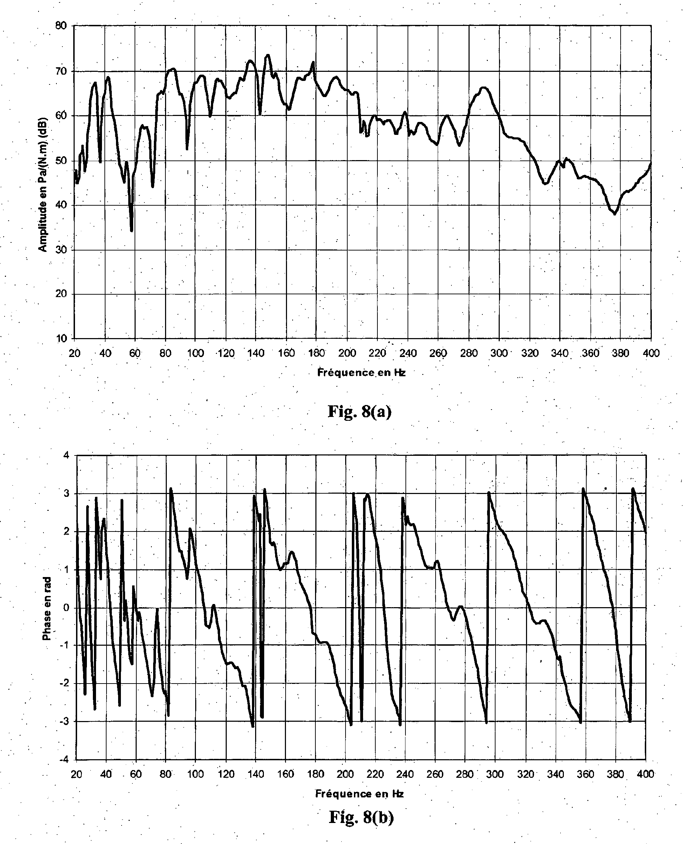

La figure 8 représente un exemple expérimental de fonction de transfert acoustique $T_{caisse}$ d'une caisse 50 de véhicule. Cet exemple correspond au transfert acoustique entre le centre roue arrière droit et un microphone dans l'habitacle à la place avant gauche pour une excitation en moment autour de l'axe X exprimé dans le repère véhicule. La mesure est à l'arrêt. Dans ce cas particulier la caisse est une AUDI A4 berline. La position géométrique du centre roue vis-à-vis de la caisse est similaire à celle que le centre roue aurait sur le véhicule. Le graphe (a) correspond à l'amplitude du transfert acoustique dans le domaine fréquentiel tandis que le graphe (b) représente la phase de ce transfert.

Pour déterminer l'admittance de la caisse $Y_{caisse}$ au point d'attache, on complète le dispositif précédent en disposant comme indiqué aux figures 2 (a) et (b) des accéléromètres par exemple 34 et 35 sur la pièce 310. Ces positions des accéléromètres sont bien déterminées par rapport au point d'attache (le centre roue) de l'ensemble monté pour permettre de recalculer les niveaux vibratoires au niveau du point d'attache.

Comme précédemment, on applique des excitations au point d'attache au moyen du système 31 dans des directions prédéterminées correspondant à des excitations canoniques dans les directions du repère véhicule ; pour chaque excitation, on enregistre le signal d'excitation et les réponses en accélération du point d'attache ; on traduit l'ensemble des données temporelles vers le domaine fréquentiel à l'aide de logiciels informatiques et on détermine l'admittance de la caisse $Y_{caisse}$ au niveau du point d'attache en faisant le rapport entre les accélérations de translation et de rotation dans les diverses directions du repère véhicule du point d'attache et le signal d'excitation au niveau du point d'attache excité.

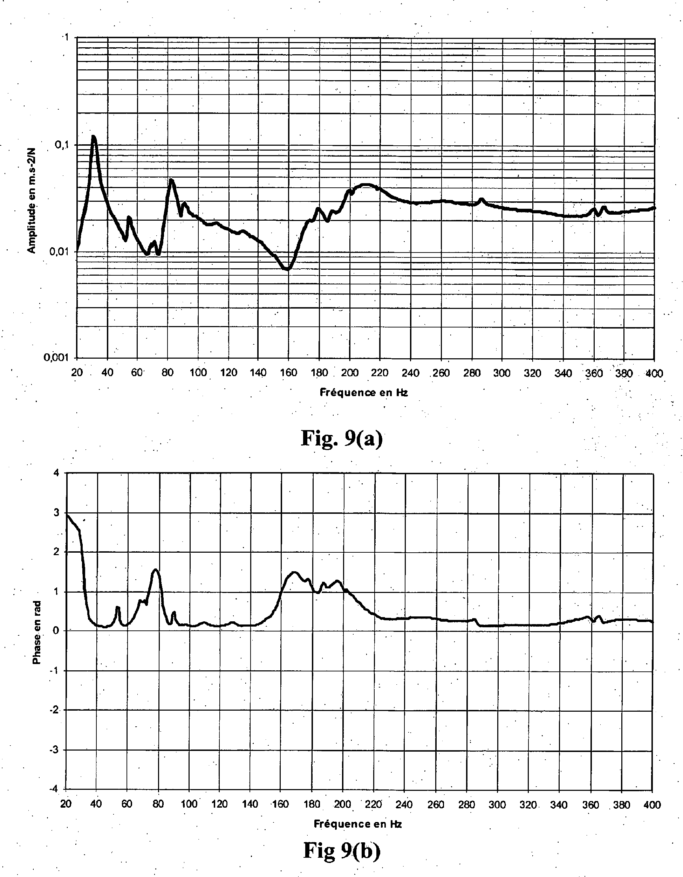

Les figures 9 (a) et (b) présentent un exemple expérimental d'admittance de la caisse $Y_{caisse}$ au niveau du centre roue avant gauche pour une excitation dans la direction X exprimée dans le repère véhicule. La mesure est à l'arrêt et la position géométrique du centre roue vis-à-vis de la caisse est similaire à celle que le centre roue aurait sur le véhicule. Dans ce cas particulier, la caisse est une AUDI A4 berline. Le graphe (a) correspond à l'amplitude de l'admittance exprimée en échelle logarithmique dans le domaine fréquentiel tandis que le graphe (b) représente la phase de cette même admittance.

Pour obtenir la mesure de l'impédance globale $Z_S$ du système de liaison au sol au niveau d'un point d'attache donné, le système de liaison au sol comprenant les éléments déterminés au préalable est monté par ses points d'attache sur un bâti 21. Un tel montage dans le cas d'un système de liaison au sol complet est schématiquement présenté aux figures 3 et 4. Le pneumatique 2 roule sur un volant 3 pourvu d'un revêtement lisse et supporte en sa surface de contact des charges identiques à celles transmises par le véhicule 1.

Le plan de la figure 3 contient les directions notées X et Z (la direction Y est perpendiculaire au plan de cette figure 3 et parallèle à la direction de l'axe de rotation du volant 3). Le plan de la figure 4 contient les directions perpendiculaires Y et Z.

Le bâti 21 est conçu de façon que sa première fréquence de résonance ne soit pas comprise dans la plage des fréquences de réalisation des mesures.

Au niveau du point d'attache excité (ici l'attache de l'articulation élastique 12 de connexion entre le bras longitudinal arrière gauche 11 à la caisse 50), un dispositif mécanique 38 permet d'appliquer des excitations en moment à l'aide des pots vibrants 39 et 40. Le dispositif 38 est connecté au bâti 21 par des liaisons souples 37.

Ce dispositif 38 est équipé, d'une part, d'accéléromètres 41, 42 afin de mesurer le vecteur déplacement (translation et rotation) du point d'attache, et d'autre part, de cellules d'effort 22 pour enregistrer en ce point d'attache les efforts et moments dans trois directions perpendiculaires.

Le dispositif mécanique 38 est conçu de façon que sa première fréquence de résonance ne soit pas comprise dans la plage des fréquences de réalisation des mesures.

En chacun des cinq autres points d'attache du système de liaison au sol au bâti 21, sont placés des cellules d'effort 23, 24, 25, 26, 27 pour enregistrer en ces points les efforts et les moments dans trois directions perpendiculaires.

Les mesures sur le système de liaison au sol sont réalisées à la même vitesse que celle utilisée sur le véhicule 1 lors de la mesure de la performance bruit/confort.

L'excitation au point d'attache présenté permet d'imposer la cinématique du point d'attache dans la direction laissée libre de mouvement (rotation autour de l'axe Y) sans exciter les autres degrés de liberté du point d'attache.

Les manipulations vont consister à imposer un moment correspondant à une rotation autour de l'axe Y au point d'attache de l'articulation 12 et à mesurer le vecteur déplacement correspondant du point d'attache ainsi que les efforts résultants au niveau de l'ensemble des points d'attache du système de liaison au sol.

Après avoir effectué ces mesures pour l'ensemble des degrés de liberté de chaque point d'attache (au moyen de montages adaptés similaires à celui présenté aux figures 3 et 4), on traduit l'ensemble des données temporelles vers le domaine fréquentiel et on détermine l'impédance du système de liaison au sol en faisant le rapport entre les signaux de force et de moment du point d'attache et le niveau de déplacement du point d'attache.

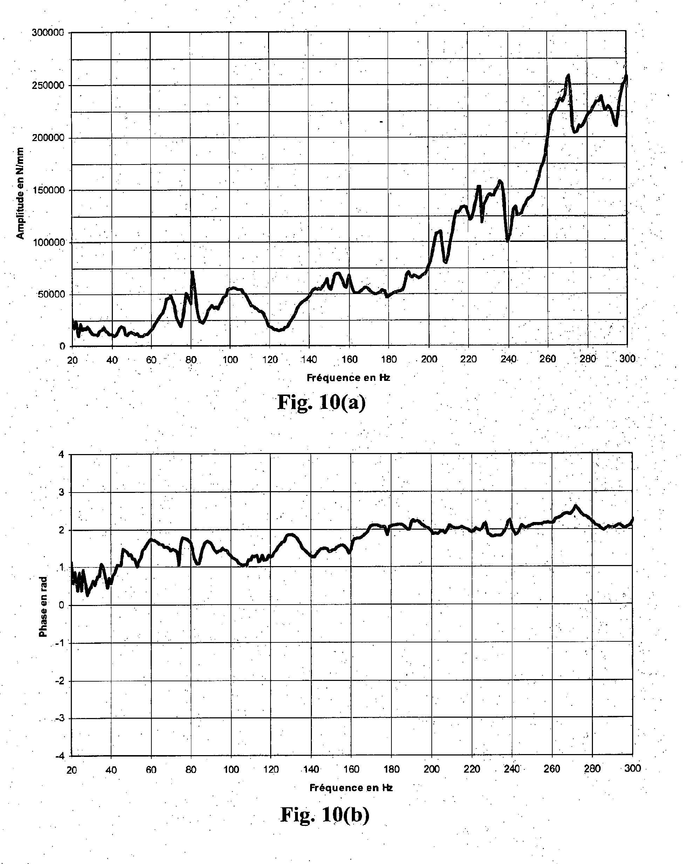

Les figures 10 (a) et (b) présentent un exemple expérimental de l'impédance $Z_S$ d'un système de liaison au sol au centre roue dans le cas d'un système de liaison au sol limité à un ensemble monté. L'exemple correspond à une excitation dans la direction Y exprimée dans le repère véhicule. Dans ce cas particulier il s'agit d'un pneumatique Michelin Primacy HP de dimension 225/55 R16 95W gonflé à 3,3 bars monté sur une jante alliage de référence 8E0 601 025 C de dimension 7J16 H2 ET 42. Le graphe (a) correspond à l'amplitude de l'impédance à l'arrêt exprimée dans le domaine fréquentielle tandis que le graphe (b) représente la phase de cette impédance.

Les figures 5 et 6 présentent un montage d'un système de liaison au sol sur un bâti 21 permettant d'obtenir la mesure des efforts de blocage du système de liaison au sol au niveau des points d'attache. Ces mesures sont effectuées le pneumatique 2 roulant sur un volant 3 pourvu d'un obstacle 4 identique aux essais sur le véhicule 1 roulant par l'intermédiaire de son système de liaison au sol sur le même volant 3 équipé du même obstacle 4.

Le plan de la figure 5 contient les directions notées X et Z (la direction Y est perpendiculaire au plan de cette figure 5 et parallèle à la direction de l'axe de rotation du volant 3). Le plan de la figure 6 contient les directions perpendiculaires Y et Z.

Le bâti 21 est conçu de façon que sa première fréquence de résonance ne soit pas comprise dans la plage des fréquences de réalisation des mesures.

En chacun des six points d'attache du système de liaison au sol au bâti 21 sont placées des cellules d'effort 22, 23, 24, 25, 26, 27 pour enregistrer en ces points les efforts et les moments dans trois directions perpendiculaires.

Les mesures sur le système de liaison au sol sont réalisées à la même vitesse que celle utilisée sur le véhicule 1 lors de la mesure de la performance bruit/confort.

Pour obtenir la mesure des efforts de blocage du système de liaison au sol correspondant à l'ensemble monté seul au niveau du centre roue, la figure 7 montre que l'ensemble monté est monté au niveau du centre roue sur un bâti équipé d'un moyeu dynamométrique 43. Le pneumatique 2 roule sur un volant 3 pourvu d'un obstacle 4 identique aux essais sur le véhicule 1 roulant par l'intermédiaire de son ensemble monté sur le même volant 3 équipé du même obstacle 4.

Bien sur ce qui a été décrit sur un moyen de roulage de type volant peut être réalisé sur une machine de roulage reproduisant des conditions de roulage proches d'un sol plan (notamment machine à « bande plate »)

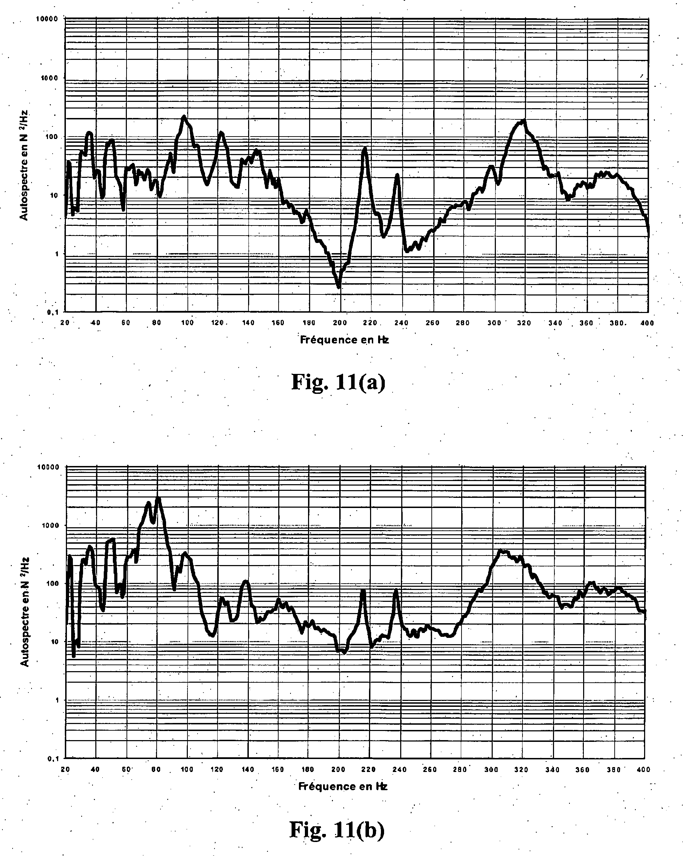

La figure 11 correspond aux efforts de blocage du ensemble monté obtenus au centre roue à partir d'une mesure sur rouleuse à une vitesse moyenne de 80 Km/h sur un sol macrorugueux, c'est-à-dire présentant une pluralité d'aspérités ou obstacles. Dans ce cas particulier, il s'agit de l'ensemble monté constitué de l'enveloppe Michelin Primacy HP de dimension 225/55 R16 95W gonflé à 3,3 bars monté sur une jante alliage de référence 8E0 601 025 C de dimension 7J16 H2 ET 42. Le graphe (a) correspond à l'autospectre des efforts de blocage dans la direction X exprimé dans le repère véhicule tandis que le graphe (b) représente l'autospectre des efforts dans la direction Z pour ce même pneumatique.

Pour obtenir une prévision de la performance bruit/confort à l'intérieur de l'habitacle pour un système donné de liaison au sol, *P*, on combine ensemble la fonction de transfert globale de la caisse, l'admittance globale de la caisse, l'impédance globale du système de liaison au sol et les efforts de blocage du système de liaison au sol :

$$P = T_{caisse} * [I + Z_S * Y_{caisse}]^{-1} * F_S^b$$

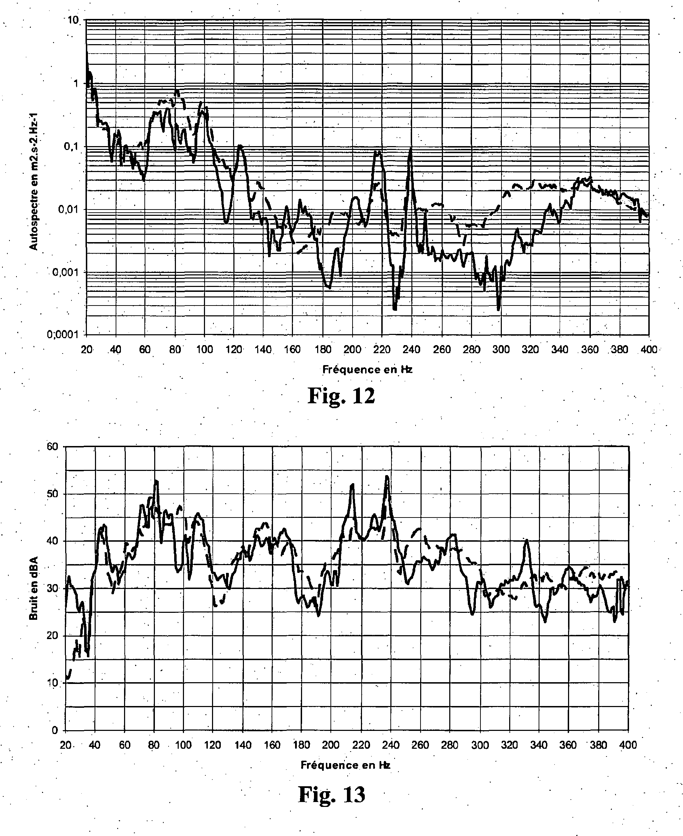

La figure 12 représente une comparaison du niveau vibratoire d'un véhicule dont seule la roue arrière droite roule, à une vitesse moyenne de 80 Km/h, sur un sol macrorugueux identique aux mesures des efforts de blocage. Le véhicule est équipé à l'arrière droit d'un ensemble monté constitué l'enveloppe Michelin Primacy HP de dimension 225/55 R16 95W gonflé à 3,3 bars monté sur une jante alliage de référence 8E0 601 025 C de dimension 7J16 H2 ET 42. Cette figure 13 représente l'autospectre vibratoire du véhicule dans la direction Z en un point géométrique particulier.

La courbe en trait pointillé correspond à la mesure directe dans l'habitacle au moyen des accéléromètres et la courbe en trait plein correspond à la prévision résultant de la combinaison de diverses mesures telles que celles décrites précédemment.

La figure 13 complète les résultats de la figure 12 en représentant la comparaison du niveau acoustique dans les mêmes conditions opératoires. Cette figure 13 représente le spectre acoustique d'un microphone à l'intérieur du véhicule situé à la place arrière droite. Comme précédemment, la courbe en trait pointillé correspond à la mesure directe dans l'habitacle au moyen d'un microphone et la courbe en trait plein correspond à la prévision résultant de la combinaison des diverses mesures décrites précédemment.

La similitude des courbes expérimentales et prédites démontre tout l'intérêt de la méthode de prévision décrite.

Il est à noter que les données nécessaires à la combinaison correspondant à la formule

$$P = T_{caisse} * [I + Z_S * Y_{caisse}]^{-1} * F_S^b$$ peuvent être obtenues par des moyens expérimentaux comme précédemment décrit, mais aussi en tout ou partie par des données numériques issues d'une simulation de la caractérisation expérimentale. Cela renforce singulièrement l'intérêt de cette méthode de prévision de la performance bruit-confort dans l'habitacle d'une caisse donnée équipée d'un système de liaison au sol donné.

L'un des objets de l'invention permet de prévoir, pour une vitesse V choisie et dans les conditions de roulage sur volant 3 pourvu d'une aspérité ou obstacle 4, les efforts opérationnels au point d'attache du véhicule 1.

Ces efforts opérationnels peuvent être obtenus par combinaison de l'admittance de la caisse exprimée au point d'attache du système de liaison au sol à la caisse $Y_{caisse}$, de l'impédance du système de liaison au sol exprimée au point d'attache $Z_S$, et des efforts de blocage du système de liaison au sol au point d'attache $F_S^b$ en appliquant la formule :

$$F_S^{op} = [I + Z_S * Y_{caisse}]^{-1} * F_S^b$$

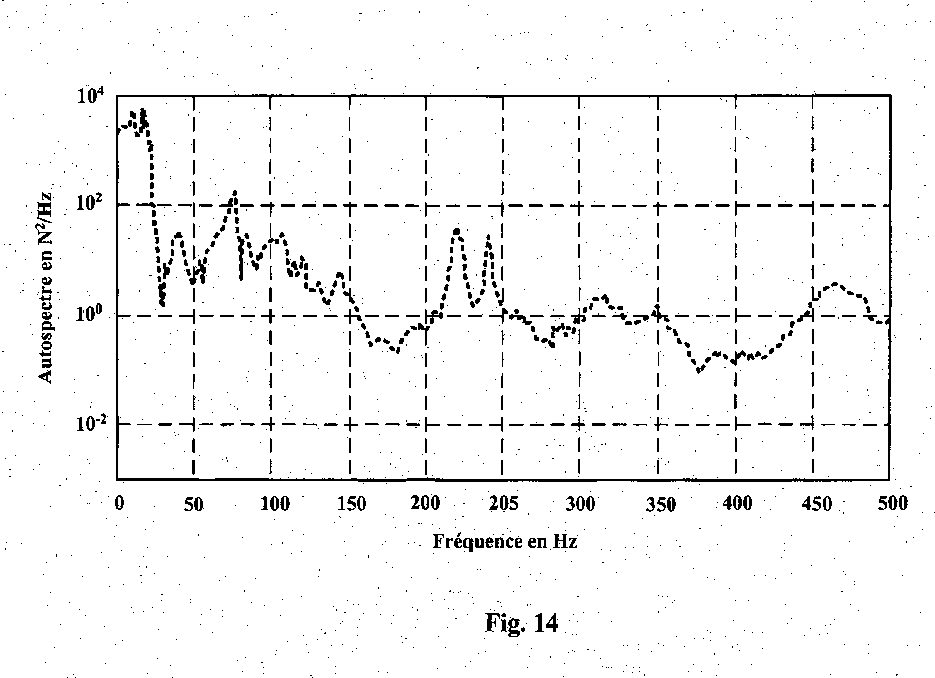

La figure 14 présente un exemple de prévision des efforts opérationnels au point d'attache d'un véhicule. Cette courbe est obtenue par combinaison de résultats expérimentaux similaires à ceux présentés aux figures 9, 10 et 11. Cette courbe représente l'autospectre de l'effort opérationnel dans la direction Z au niveau du centre roue.

L'invention n'est pas limitée aux exemples décrits et représentés et diverses modifications peuvent y être apportées sans sortir de son cadre défini par les revendications annexées.

## Revendications

1. Méthode de prévision des efforts opérationnels au point d'attache d'un véhicule constitué d'une caisse et d'un système de liaison au sol lié à la caisse par au moins un point d'attache, le véhicule roulant à une vitesse donnée V sur un moyen de roulage comportant sur sa surface de roulage au moins une aspérité de dimension prédéterminée, cette méthode consistant à :

   - déterminer une admittance de la caisse exprimée au point d'attache du système de liaison au sol à la caisse ($Y_{caisse}$) ;
   - déterminer une impédance du système de liaison au sol exprimée au point d'attache ($Z_S$);
   - déterminer en roulage les efforts de blocage du système de liaison au sol au point d'attache $(F_S^b)$ ; et
   - combiner ensemble l'admittance globale de la caisse, l'impédance globale du système de liaison au sol et les efforts de blocage du système de liaison au sol.

2. Méthode selon la revendication 1, dans laquelle, pour déterminer l'admittance de la caisse exprimée au point d'attache du système de liaison au sol à la caisse, on procède à des mesures sur la caisse à l'arrêt selon les étapes suivantes :

   - on positionne le point d'attache du système de liaison au sol par rapport à la caisse de façon analogue à sa position sur le véhicule équipé du système de liaison au sol ; le point d'attache au niveau de la caisse étant libre en déplacement et rotation et étant suspendu à l'aide de liaisons élastiques souples ;

- on équipe ledit point d'attache de capteurs de vibrations tels des accéléromètres permettant de mesurer le niveau vibratoire dudit point d'attache de la caisse ;

- on applique audit point d'attache des excitations à l'aide d'un système d'excitation dans des directions prédéterminées correspondant à des excitations dans les directions du repère véhicule ;

- pour chaque excitation, on enregistre le signal d'excitation au niveau du point d'attache et les réponses vibratoires dudit point d' attache ;

- on traduit l'ensemble des données temporelles vers le domaine fréquentiel à l'aide de logiciels informatiques ; et

- on détermine l'admittance de la caisse au niveau dudit point d'attache en faisant le rapport entre les réponses vibratoires dans les diverses directions du repère véhicule du point d'attache et le signal d'excitation au niveau du point d'attache excité.

**3.** Méthode selon la revendication 2, dans laquelle on enregistre les réponses vibratoires de translation et de rotation dudit point d'attache.

**4.** Méthode selon l'une des revendications 2 et 3, dans laquelle, lorsque le point d'attache n'est pas accessible, on place des capteurs de vibrations tels des accéléromètres et on applique des excitations en des points géométriques, parfaitement déterminés vis-à-vis du point d'attache et on recalcule au moyen d'une transformation géométrique les niveaux vibratoires du point d'attache ainsi que les efforts au point d'attache à partir des efforts aux points d'excitation.

**5.** Méthode selon l'une des revendications 1 à 4, dans laquelle, pour déterminer l'impédance du système de liaison au sol exprimée au point d'attache à la caisse, on procède à des mesures sur le système de liaison au sol selon les étapes suivantes :

- on met en place le système de liaison au sol sur un dispositif équipé d'un revêtement lisse ;
- on relie mécaniquement le système de liaison au sol à un banc audit point d'attache par l'intermédiaire de connexions souples vis-à-vis de la rigidité du système de liaison au sol, ledit banc étant équipé de moyens de mesure des déplacements et des forces et moments dudit point d'attache du système de liaison au sol, de telle sorte que le point d'attache est libre de se mouvoir dans une direction de translation ou de rotation ;

- on applique une excitation audit point d'attache à l'aide d'un système d'excitation adapté pour imposer la cinématique du point d'attache dans la direction préalablement laissé libre de mouvement ;

- on effectue pour chaque excitation audit point d'attache, pour l'ensemble des degrés de liberté du point d'attache, une mesure du vecteur déplacement (translation et rotation) du point d'attache excité et une mesure du vecteur des efforts résultants (forces et moments) au point d'attache du système de liaison au sol ;

- on traduit l'ensemble des données temporelles vers le domaine fréquentiel à l'aide de logiciels informatiques ; et

- on détermine l'impédance du système de liaison au sol en faisant le rapport entre les signaux de forces et de moments dudit point d'attache et le niveau vibratoire du point d'attache pour au plus les six degrés de liberté du point d'attache.

**6.** Méthode selon la revendication 5, dans laquelle le système de liaison au sol, préalablement à l'application des excitations, est mis en place sur le dispositif équipé d'un revêtement lisse dans des conditions de roulage semblables à celles du véhicule.

**7.** Méthode selon l'une des revendications 5 et 6, dans laquelle le système d'excitation est adapté pour imposer la cinématique du point d'attache dans la direction préalablement laissée libre de mouvement sans exciter les autres degrés de liberté du point d'attache.

**8.** Méthode selon l'une des revendications 1 à 7, dans laquelle, pour déterminer les efforts de blocage du système de liaison au sol au point d'attache, on procède à des mesures sur le système de liaison au sol selon les étapes suivantes :

- on met en place le système de liaison au sol sur un moyen de roulage comportant sur sa surface de roulage au moins une aspérité de dimension prédéterminée similaire aux essais sur véhicule ;
- on fixe rigidement le système de liaison au sol sur un banc audit point d'attache, ledit banc étant équipé de moyens de mesure des forces et moments audit point d'attache ;
- on sollicite le système de liaison au sol sur ledit moyen de roulage dans des conditions de roulage identiques à celles sur véhicule ;
- au cours du roulage, on enregistre les signaux des forces et moments audit point d' attache ; et
- on traduit l'ensemble des données temporelles vers le domaine fréquentiel à l'aide de logiciels informatiques.

9. Méthode selon l'une quelconque des revendications précédentes, dans laquelle, pour évaluer les efforts opérationnels au point d'attache du véhicule équipé du système de liaison au sol, on effectue l'opération suivante :

$$F_S^{op} = \left[ I + Z_S * Y_{caisse} \right]^{-1} * F_S^b$$

dans laquelle, pour chaque fréquence étudiée :

- $F_S^{op}$ correspond aux efforts opérationnels au point d'attache du véhicule, c'est une matrice de dimensions $n, 1$ ; $n$ étant le nombre de directions prédéterminées d'excitation dudit point d'attache du véhicule ;
- $I$ est une matrice unité de dimensions $n, n$ ;
- $Y_{caisse}$ est l'admittance de la caisse ; matrice carrée de dimension $n$ ;
- $Z_S$ est l'impédance du système de liaison au sol ; matrice carrée de dimension $n$ ; et
- $F_S^b$ correspond aux efforts de blocage du système de liaison au sol ; matrice de dimensions $n, 1$.

10. Méthode selon l'une quelconque des revendications 2 à 9, dans laquelle le système d'excitation comprend des pots vibrants.

11. Méthode selon l'une quelconque des revendications précédentes, dans laquelle le système de liaison au sol se réduit à un ensemble monté.

12. Méthode selon l'une quelconque des revendications précédentes, dans laquelle des données expérimentales sont substituées par des données numériques issues d'une simulation de la caractérisation expérimentale.

**Patentansprüche**

1. Verfahren zur Vorhersage operativer Kräfte an der Befestigungsstelle eines Fahrzeugs, das aus einer Karosserie und einem Bodenverbindungssystem besteht, das mit der Karosserie durch mindestens eine Befestigungsstelle verbunden ist, wobei das Fahrzeug mit gegebener Geschwindigkeit V auf einem Rollmittel fährt, das auf seiner Rolloberfläche mindestens eine Rauheit mit vorbestimmtem Maß aufweist, wobei das Verfahren aus Folgendem besteht:

- Bestimmen einer Admittanz der Karosserie ausgedrückt an der Befestigungsstelle des Bodenverbindungssystems mit der Karosserie ($Y_{Karosserie}$),
- Bestimmen einer Impedanz des Bodenverbindungssystems ausgedrückt an der Befestigungsstelle ($Z_S$),
- beim Rollen Bestimmen der Blockierungskräfte des Bodenverbindungssystems an der Befestigungsstelle ($F_S^b$) , und
- Kombinieren der globalen Admittanz der Karosserie, der globalen Impedanz des Bodenverbindungssystems und der Blockierungskräfte des Bodenverbindungssystems.

2. Verfahren nach Anspruch 1, bei dem man zum Bestimmen der Admittanz der Karosserie ausgedrückt an der Befestigungsstelle des Bodenverbindungssystems an der Karosserie Messungen auf der Karosserie beim Stillstand gemäß den folgenden Schritten ausführt:

- man positioniert die Befestigungsstelle des Bodenverbindungssystems in Bezug auf die Karosserie analog zu ihrer Position auf dem Fahrzeug, das mit dem Bodenverbindungssystem ausgestattet ist, wobei die Befestigungsstelle im Bereich der Karosserie in Verlagerung und Drehung frei ist und mit Hilfe biegsamer elastischer Verbindungen aufgehängt ist,
- man stattet die Befestigungsstelle mit Vibrationsfühlern, wie zum Beispiel Beschleunigungsmessern, aus, die es erlauben, das Schwingungsniveau der Befestigungsstelle der Karosserie zu messen,
- man legt an die Befestigungsstelle Erregungen mit Hilfe eines Erregungssystems in vorbestimmte Richtungen, die Erregungen in die Richtungen der Fahrzeugkennzeichnung entsprechen, an,
- man registriert für jede Erregung das Erregungssignal im Bereich der Befestigungsstelle und die Schwingungsreaktionen der Befestigungsstelle,
- man wandelt sämtliche zeitliche Daten in den Frequenzbereich mit Hilfe von Softwareprogrammen um, und man bestimmt die Admittanz der Karosserie im Bereich der Befestigungsstelle, indem man die Beziehung zwischen den Schwingungsreaktionen in die unterschiedlichen Richtungen der Fahrzeugkennzeichnung der Befestigungsstelle und dem Erregungssignal im Bereich der erregten Befestigungsstelle bestimmt.

3. Verfahren nach Anspruch 2, bei dem man die Verschiebungs- und Rotationsschwingungsreaktionen der Befestigungsstelle aufzeichnet.

**4.** Verfahren nach einem der Ansprüche 2 und 3, bei dem man, wenn die Befestigungsstelle nicht zugänglich ist, Schwingungsfühler, wie zum Beispiel Beschleunigungsmesser, platziert und Erregungen an geometrischen Stellen, die in Bezug auf die Befestigungsstelle perfekt bestimmt sind, anlegt und mittels einer geometrischen Transformation die Schwingungsniveaus der Befestigungsstelle sowie die Kräfte an der Befestigungsstelle ausgehend von den Kräften an den Erregungsstellen neu berechnet.

**5.** Verfahren nach einem der Ansprüche 1 bis 4, bei dem man zum Bestimmen der Impedanz des Bodenverbindungssystems ausgedrückt an der Befestigungsstelle an der Karosserie Messungen auf dem Bodenverbindungssystem gemäß den Folgenden Schritten ausführt:

- man richtet das Bodenverbindungssystem auf einer Vorrichtung, die mit einer glatten Beschichtung ausgestattet ist, ein,
- man verbindet das Bodenverbindungssystem mechanisch mit dem Prüfstand an der Verbindungsstelle durch in Bezug auf die Steifigkeit des Bodenverbindungssystems biegsamen Verbindungen, wobei der Prüfstand mit Mitteln zum Messen der Verlagerungen und der Kräfte und Drehmomente der Befestigungsstelle des Bodenverbindungssystems ausgestattet ist, so dass sich die Befestigungsstelle in eine Verschiebungs- und Rotationsrichtung frei bewegen kann,
- man legt eine Erregung an der Befestigungsstelle mit Hilfe eines Erregungssystems an, das angepasst ist, um die Kinematik an der Befestigungsstelle in die zuvor bewegungsfrei gelassene Richtung aufzuerlegen,
- man führt für jede Erregung an der Befestigungsstelle für sämtliche Freiheitsgrade der Befestigungsstelle eine Messung des Bewegungsvektors (Verschiebung und Drehung) der erregten Befestigungsstelle und eine Messung des Vektors der resultierenden Kräfte (Kräfte und Drehmomente) an der Befestigungsstelle des Bodenverbindungssystems aus,
- man wandelt sämtliche zeitliche Daten in den Frequenzbereich mit Hilfe von Softwareprogrammen um, und
- man bestimmt die Impedanz des Bodenverbindungssystems, indem man die Beziehung zwischen den Signalen der Kräfte und Drehmomente der Befestigungsstelle und dem Schwingungsniveau der Befestigungsstelle für maximal sechs Freiheitsgrade der Befestigungsstelle erstellt.

**6.** Verfahren nach Anspruch 5, bei dem das Bodenverbindungssystem vor dem Anlegen der Erregungen auf der Vorrichtung, die mit einer glatten Beschichtung ausgestattet ist, unter ähnlichen Rollbedingungen wie die des Fahrzeugs angebracht wird.

**7.** Verfahren nach einem der Ansprüche 5 und 6, bei dem das Erregungssystem angepasst ist, um die Kinematik der Befestigungsstelle in die zuvor bewegungsfrei gelassene Richtung ohne Erregen der anderen Freiheitsgrade der Befestigungsstelle aufzuerlegen.

**8.** Verfahren nach einem der Ansprüche 1 bis 7, bei dem man zum Bestimmen der Blockierungskräfte des Bodenverbindungssystems an der Befestigungsstelle Messungen auf dem Bodenverbindungssystem gemäß den folgenden Schritten ausführt:

- man richtet das Bodenverbindungssystem auf einem Rollmittel ein, das auf seiner Rolloberfläche mindestens eine Rauheit mit vorbestimmtem Maß ähnlich dem der Versuche auf dem Fahrzeug aufweist,
- man befestigt das Bodenverbindungssystem starr auf einem Prüfstand an der Befestigungsstelle, wobei der Prüfstand mit Mitteln zum Messen der Kräfte und Drehmomente an der Befestigungsstelle ausgestattet ist,
- man beansprucht das Bodenverbindungssystem auf dem Rollmittel unter identischen Rollbedingungen wie die des Fahrzeugs,
- man registriert im Laufe des Rollens die Signale der Kräfte und Drehmomente an der Befestigungsstelle, und
- man wandelt sämtliche zeitliche Daten in den Frequenzbereich mit Hilfe von Softwareprogrammen um.

**9.** Verfahren nach einem der vorhergehenden Ansprüche, bei dem man zum Beurteilen der Betriebskräfte an der Befestigungsstelle des Fahrzeugs, das mit dem Bodenverbindungssystem ausgestattet ist, die folgende Operation ausführt:

$$F_S^{op} = \left[ I + Z_S * Y_{Karosserie} \right]^{-1} * F_S^b$$

wobei, für jede untersuchte Frequenz:

- $F_S^{op}$ den Betriebskräften an der Befestigungsstelle des Fahrzeugs entspricht, das heißt eine Matrix mit den Maßen *n, 1;* wobei *n* die Anzahl vorbestimmter Erregungsrichtungen der Befestigungsstelle des Fahrzeugs ist,
- *I* eine Einheitsmatrix mit den Maßen *n, n* ist,
- $Y_{Karosserie}$ die Admittanz der Karosserie ist;

quadratische Matrix mit Maß *n,*
- Z die Impedanz des Bodenverbindungssystems ist; quadratische Matrix mit Maß n, und
- $F_S^b$ den Blockierungskräften des Bodenverbindungssystems entspricht; Matrix mit den Maßen *n, 1.*

10. Verfahren nach einem der Ansprüche 2 bis 9, bei dem das Erregungssystem Rütteltöpfe aufweist.

11. Verfahren nach einem der vorhergehenden Ansprüche, bei dem das Bodenverbindungssystem auf eine montierte Einheit reduziert ist.

12. Verfahren nach einem der vorhergehenden Ansprüche, bei dem Experimentaldaten durch digitale Daten, die aus einer Simulation der experimentellen Charakterisierung stammen, ersetzt werden.

**Claims**

1. Method for predicting the operational loads at the point of attachment of a vehicle consisting of a body-shell and of a ground link system linked to the body-shell by at least one point of attachment, the vehicle rolling at a given speed V on a rolling means comprising on its rolling surface at least one irregularity of predetermined dimension, this method consisting in:

   - determining an admittance of the body-shell expressed at the point of attachment of the ground link system to the body-shell ($Y_{body-shell}$);
   - determining an impedance of the ground link system expressed at the point of attachment ($Z_S$);
   - determining while rolling the lockup loads of the ground link system at the point of attachment $\left( F_S^b \right)$; and
   - combining together the global admittance of the body-shell, the global impedance of the ground link system and the lockup loads of the ground link system.

2. Method according to Claim 1, in which, to determine the admittance of the body-shell expressed at the point of attachment of the ground link system to the body-shell, measurements are undertaken on the body-shell when stationary according to the following steps:

   - the point of attachment of the ground link system is positioned with respect to the body-shell in a manner analogous to its position on the vehicle equipped with the ground link system; the point of attachment at the level of the body-shell being free in displacement and rotation and being suspended with the aid of flexible elastic links;
   - the said point of attachment is equipped with vibration sensors such as accelerometers making it possible to measure the vibratory level of the said point of attachment of the body-shell;
   - excitations are applied to the said point of attachment with the aid of an excitation system in predetermined directions corresponding to excitations in the directions of the vehicle reference frame;
   - for each excitation, the excitation signal at the level of the point of attachment and the vibratory responses of the said point of attachment are recorded;
   - the set of temporal data is translated to the frequency domain with the aid of computer software; and
   - the admittance of the body-shell at the level of the said point of attachment is determined by taking the ratio between the vibratory responses in the various directions of the vehicle reference frame of the point of attachment and the excitation signal at the level of the excited point of attachment.

3. Method according to Claim 2, in which the translational and rotational vibratory responses of the said point of attachment are recorded.

4. Method according to one of Claims 2 and 3, in which, when the point of attachment is not accessible, vibration sensors such as accelerometers are fitted and excitations are applied at geometric points, perfectly determined in relation to the point of attachment and the vibratory levels of the point of attachment are recalculated by means of a geometric transformation together with the loads at the point of attachment on the basis of the loads at the excitation points.

5. Method according to one of Claims 1 to 4, in which, to determine the impedance of the ground link system expressed at the point of attachment to the body-shell, measurements are undertaken on the ground link system according to the following steps:

   - the ground link system is fitted in place on a device equipped with a smooth cladding;
   - the ground link system is connected mechanically to a bench at the said point of attachment by way of connections which are flexible in relation to the rigidity of the ground link system, the said bench being equipped with means for measuring the displacements and the forces and moments of the said point of attachment of the ground link system, in such a way that the point of attachment is free to move in a direction of translation or rotation;

- an excitation is applied at the said point of attachment with the aid of an excitation system adapted for imposing the kinematics of the point of attachment in the direction previously left free of motion;

- a measurement of the displacement vector (translation and rotation) of the excited point of attachment and a measurement of the vector of the resulting loads (forces and moments) at the point of attachment of the ground link system are performed for each excitation at the said point of attachment, for the set of degrees of freedom of the point of attachment;

- the set of temporal data is translated to the frequency domain with the aid of computer software; and

- the impedance of the ground link system is determined by taking the ratio between the signals of forces and of moments of the said point of attachment and the vibratory level of the point of attachment for at most the six degrees of freedom of the point of attachment.

6. Method according to Claim 5, in which the ground link system, prior to the application of the excitations, is fitted in place on the device equipped with a smooth cladding under rolling conditions similar to those of the vehicle.

7. Method according to one of Claims 5 and 6, in which the excitation system is adapted for imposing the kinematics of the point of attachment in the direction previously left free of motion without exciting the other degrees of freedom of the point of attachment.

8. Method according to one of Claims 1 to 7, in which, to determine the lockup loads of the ground link system at the point of attachment, measurements are undertaken on the ground link system according to the following steps:

- the ground link system is fitted in place on a rolling means comprising on its rolling surface at least one irregularity of predetermined dimension similar to the on-vehicle trials;
- the ground link system is fixed rigidly on a bench at the said point of attachment, the said bench being equipped with means for measuring the forces and moments at the said point of attachment;
- the ground link system is stressed on the said rolling means under rolling conditions identical to those on vehicle;
- while rolling, the signals of the forces and moments at the said point of attachment are recorded; and
- the set of temporal data is translated to the frequency domain with the aid of computer software.

9. Method according to any one of the preceding claims, in which, to evaluate the operational loads at the point of attachment of the vehicle equipped with the ground link system, the following operation is performed:

$$F_S^{op} = \left[I + Z_S * Y_{body-shell}\right]^{-1} * F_S^b$$

in which, for each frequency studied:

- $F_S^{op}$ corresponds to the operational loads at the point of attachment of the vehicle; it is a matrix of dimensions $n, 1$; $n$ being the number of predetermined directions of excitation of the said point of attachment of the vehicle;
- $I$ is a unit matrix of dimensions $n, n$;
- $Y_{body-shell}$ is the admittance of the body-shell; square matrix of dimension $n$;
- $Z_S$ is the impedance of the ground link system; square matrix of dimension $n$; and
- $F_S^b$ corresponds to the lockup loads of the ground link system; matrix of dimensions $n, 1$.

10. Method according to one of Claims 2 to 9, in which the excitation system comprises vibrating pots.

11. Method according to any one of the preceding claims, in which the ground link system reduces to a mounted assembly.

12. Method according to any one of the preceding claims, in which experimental data are substituted by digital data arising from a simulation of the experimental characterization.

**Fig. 1**

**Fig. 2 (a)**

**Fig. 2 (b)**

**Fig. 3**

**Fig. 4**

**Fig. 5**

**Fig. 6**

**Fig. 7**

**Fig. 8(a)**

**Fig. 8(b)**

**Fig. 9(a)**

**Fig 9(b)**

**Fig. 10(a)**

**Fig. 10(b)**

**Fig. 11(a)**

**Fig. 11(b)**

**Fig. 12**

**Fig. 13**

Autospectre en $N^2$/Hz

Fréquence en Hz

Fig. 14

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0886130 B1
- EP 1200808 B1

- WO 2005071385 A1